# EUROPÄISCHE PATENTSCHRIFT

(11) **EP 1 760 358 B1**
(45) Veröffentlichungstag und Bekanntmachung des Hinweises auf die Patenterteilung: **11.01.2012**
(21) Anmeldenummer: 06017845.6
(22) Anmeldetag: 26.08.2006
(51) Int. Cl.: F16F 15/134

(54) **Torsionsschwingungsdämpfer im Antriebsstrang eines Fahrzeuges**
Torsional vibration damper in a vehicle drive line
Amortisseur de vibrations de torsion pour une ligne de transmission de véhicule

(30) Priorität: 06.09.2005 DE 102005042183
(43) Veröffentlichungstag der Anmeldung: 07.03.2007
(73) Patentinhaber: Schaeffler Technologies GmbH & Co. KG, 91074 Herzogenaurach (DE)
(72) Erfinder: Hannappel, Rainer, 56244 Kuhnhöfen (DE); Schechinger, Daniel, 77855 Achern (DE); Frietsch, Christian, 77855 Achern (DE); Mende, Hartmut, 77815 Bühl (DE)

(56) Entgegenhaltungen:
- DE-U1- 9 107 408
- FR-A1- 2 830 915

## Beschreibung

Die vorliegende Erfindung betrifft einen Torsionsschwingungsdämpfer im Antriebsstrang eines Fahrzeuges, mit einem Primärmassenschwungrad und einem Sekundärmassenschwungrad, welche gegen den Widerstand von zumindest einem mittels Beaufschlagungsbereichen begrenzten Energiespeicher relativ zueinander verdrehbar sind.

Aus der Fahrzeugtechnik sind Torsionsschwingungsdämpfer, wie z.B. Bogenfederdämpfer oder dergleichen, hinreichend bekannt. Diese Bogenfederdämpfer werden bei der Drehmomentenübertragung zwischen dem Antrieb und dem Getriebe eines Fahrzeuges zum Dämpfen von Schwingungen verwendet. Üblicherweise weist der Bogenfederdämpfer ein Primärmassenschwungrad und ein Sekundärmassenschwungrad auf, die gegen den Widerstand von Bogenfedern als Dämpfungseinrichtung relativ zueinander verdrehbar sind.

Das Primärmassenschwungrad ist üblicherweise mit einer Abtriebswelle einer Brennkraftmaschine des Fahrzeuges verbunden. Das Sekundärmassenschwungrad ist mit einer Reibungskupplung mit dazwischen liegender Kupplungsscheibe befestigt, über die eine Eingangswelle eines Getriebes zu- und abkuppelbar ist. Die Schwungräder sind über eine Lagerung zueinander verdrehbar gelagert, wobei zwischen den beiden Schwungmassen die Dämpfungseinrichtung mit den Bogenfedern wirksam wird. Das Primärmassenschwungrad und das Sekundärmassenschwungrad besitzen Beaufschlagungsbereiche für die Energiespeicher bzw. Bogenfedern, wobei die Beaufschlagungsbereiche durch in die das Primärmassenschwungrad bildenden Blechteile eingebrachte Einprägung gebildet werden. An dem Sekundärmassenschwungrad ist ein flanschartiges Beaufschlagungsbauteil vorgesehen. Das Beaufschlagungsbauteil dient als Drehmomentübertragungselement zwischen den Bogenfedern und dem Sekundärmassenschwungrad. Insgesamt werden ringförmige Räume mit einem torusartigen Bereich gebildet, in denen die Bogenfedern bzw. die Energiespeicher aufgenommen sind. Ein derart aufgebauter Torsionsschwingungsdämpfer ist durch die FR-A1-2 830 915 bekannt geworden, wobei die langen Energiespeicher mittels Gleitschuhen in einzelne Sektoren unterteilt und radial abgestützt sind.

Es hat sich gezeigt, dass es von Vorteil ist, wenn vier über den Umfang des Bogenfederdämpfers vorgesehene Bogenfedern verwendet werden, um in Zug bzw. in Schubrichtung bei der Drehmomentenübertragung unterschiedliche Bogenfedern zu beanspruchen. Neben der Erhöhung der erforderlichen Anzahl von Energiespeichern bzw. Bogenfedern ist es auch erforderlich das flanschartige Bauteil an dem Sekundärmassenschwungrad verdreht einzubauen. Somit wird bei dem bekannten Torsionsschwingungsdämpfer durch die Verdoppelung der Anzahl der Energiespeicher die Herstellungskosten und auch die Montage sowie die Werkzeugkosten erhöht.

Der vorliegenden Erfindung liegt die Aufgabe zugrunde einen Torsionsschwingungsdämpfer der eingangs genannten Gattung vorzuschlagen, welcher die Aufteilung der Zug- und der Schubbeanspruchung in vorteilhafter Weise ermöglicht und zudem kostengünstig herstellbar ist.

Diese Aufgabe wird durch einen Torsionsschwingungsdämpfer im Antriebsstrang eines Fahrzeuges, mit einem Primärmassenschwungrad und einem Sekundärmassenschwungrad gelöst, welche gegen den Widerstand von zumindest einem mittels Beaufschlagungsbereichen begrenzten Energiespeicher relativ zueinander verdrehbar sind, wobei jeder Energiespeicher durch zumindest einen an dem Primärmassenschwungrad befestigten zusätzlichen Anschlagbereich in einen bei Zugbeanspruchung des Antriebsstrangs und einen bei Schubbeanspruchung des Antriebsstranges beanspruchten Energiespeicherteil unterteilt ist.

Auf diese Weise wird bei dem erfindungsgemäßen Torsionsschwingungsdämpfer eine Unterteilung der verwendeten Energiespeicher geschaffen, ohne zusätzliche Energiespeicher zu verwenden. Somit kann die gewünschte Aufteilung in Zug- und Schubanteile bei der Drehmomentenübertragung ermöglicht werden, ohne dass die Anzahl der Energiespeicher erhöht werden muss und auch ohne dass zusätzliche Montage- sowie Werkzeugkosten anfallen.

Im Rahmen einer vorteilhaften Ausgestaltung der vorliegenden Erfindung kann als Energiespeicher zumindest ein koaxial zueinander angeordnetes Bogenfederpaar vorgesehen sein. Die Bogenfederpaare sind über den Umfang des erfindungsgemäßen Torsionsschwingungsdämpfers verteilt angeordnet. Vorzugsweise können zwei Bogenfederpaare verwendet werden, die jeweils in einem 180° Bogenwinkelsegment angeordnet sind, wobei jedes Bogenfederpaar in einem in diesem Bogenwinkelsegment sich erstreckenden ringförmigen Raum geführt ist, wobei die Enden der Bogenfedern des Bogenfederpaares jeweils an entsprechenden Beaufschlagungsbereichen des Torsionsschwingungsdämpfers anliegen. Es sind auch andere konstruktive Ausgestaltungen des Bogenfederdämpfers möglich.

Um die gewünschte Unterteilung der Energiespeicher bzw. der Bogenfedern zu realisieren, können die Windungen der Bogenfedern jedes Bogenfederpaares an einem vorbestimmten Bereich zum Bilden eines in beide Richtungen wirkenden Anschlages arretiert werden. Wenn bei zwei verwendeten Bogenfederpaaren jedes Bogenfederpaar an einem vorbestimmten Bereich arretiert wird, kann quasi eine so genannte Pseudo-Viererteilung erreicht werden, so dass sich die gleiche Wirkungsweise des Bogenfederdämpfers ergibt, wie bei einem Bogenfederdämpfer mit vier Bogenfederpaaren.

Gemäß einer Weiterbildung der Erfindung kann vorgesehen sein, dass zwei Bogenfederpaare über den Umfang des Primärmassenschwungrades und des Sekundärmassenschwungrades angeordnet sind, wobei jedes Bogenfederpaar durch den zusätzlichen Anschlagbereich in ein erstes Bogenwinkelsegment von etwa 30° und ein zweites Bogenwinkelsegment von etwa 120° unterteilt sind. Diese Unterteilung hat sich als besonders vorteilhaft erwiesen. Es sind aber auch andere Unterteilungen möglich.

Um die Unterteilung jedes Bogenfederpaares konstruktiv zu realisieren, kann gemäß einer vorteilhaften Ausführungsform der vorliegenden Erfindung vorgesehen sein, dass zumindest ein Klemmblech oder dergleichen verwendet wird. Das Klemmblech kann an unmittelbar aber auch mittelbar an dem Primärmassenschwungrad oder auch an anderen mit dem Primärmassenschwungrad verbundenen Bauteilen befestigt werden. Beispielsweise kann das Klemmblech auch an dem Deckelbauteil des Primärmassenschwungrades befestigt werden. Das Klemmblech wird drehfest mit dem Primärmassenschwungrad verbunden, so dass es zwischen die Federwindungen der Bogenfedern des Bogenfederpaares greifen kann, so dass diese Windungen ortsfest an diesem Anschlagbereich bzw. an dem Klemmblech gehalten werden. Somit wird die gewünschte Unterteilung der Bogenfedern des Bogenfederpaares erreicht. Es sind auch andere konstruktive Ausführungen zum Festlegen der Windungen der Bogenfedern vorstellbar.

Eine weitere mögliche Ausführungsform der vorliegenden Erfindung kann vorsehen, dass die Unterteilung jedes Bogenfederpaares durch ein Presselement oder dergleichen realisiert wird, welches an dem Primärmassenschwungrad unmittelbar oder mittelbar befestigt ist.

Das Presselement ist derart verformbar, dass es zumindest teilweise zwischen die Windungen der Bogenfedern des Bogenfederpaares bringbar ist. Auf diese Weise werden die Windungen an diesem vorbestimmten Bereich arretiert, so dass die gewünschte Unterteilung der Bogenfedern realisiert wird. Es ist möglich, dass zwei gegenüberliegende Presselemente verwendet werden, um eine sichere Arretierung der Bogenfedern zu realisieren. Vorzugsweise kann als Presselement ein Gummiteil oder dergleichen verwendet werden, welches aufgrund seiner elastischen Eigenschaften die ausreichende Verformung bei der Montage realisieren kann.

Es ist gemäß einer weiteren Ausgestaltung der vorliegenden Erfindung möglich, dass die Bogenfedern eines Bogenfederpaares durch einen Federclip oder dergleichen an den zusätzlichen Anschlagbereich miteinander verbunden werden. Dazu kann der Federclip an einer Windung der inneren Feder und an einer Windung der äußeren Feder befestigt werden, um diese dann miteinander zu verbinden.

Weitere vorteilhafte Ausgestaltungen ergeben sich insbesondere aus den Unteransprüchen.

Nachfolgend wird die vorliegende Erfindung anhand der Zeichnungen näher erläutert. Es zeigen:
- Figur 1: eine axial geschnittene Ansicht eines als Bogenfederdämpfer ausgebildeten Torsionsschwingungsdämpfers mit Klemmblechen zur Unterteilung der Bogenfedern;
- Figur 2: eine quer geschnittene Ansicht des Bogenfederdämpfers gemäß Figur 1;
- Figur 3: eine axial geschnittene Ansicht des Bogenfederdämpfers mit Presselementen zur Unterteilung; und
- Figur 4: eine quer geschnittene Ansicht des Bogenfederdämpfers gemäß Figur 3.

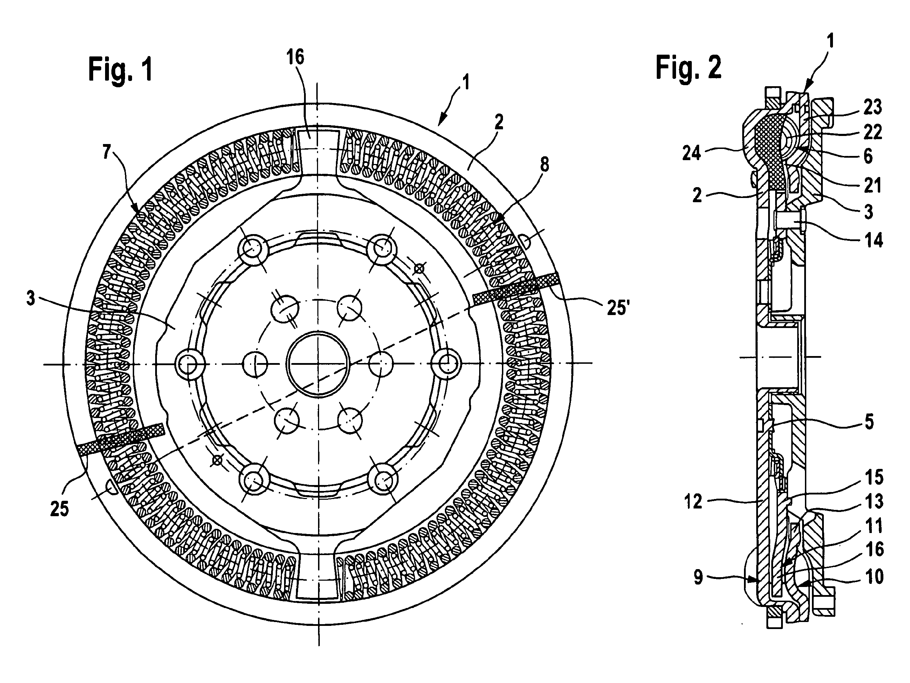

In den Figuren 1 bis 4 sind verschiedene Ausführungsformen eines als Bogenfederdämpfer 1 ausgebildeten Torsionsschwingungsdämpfers dargestellt. Der Bogenfederdämpfer 1 weist bei sämtlichen Ausführungsformen ein geteiltes Schwungrad auf, welches eine an einer nicht gezeigten Abtriebswelle einer Brennkraftmaschine befestigbares Primärmassenschwungrad 2 und ein zweites Sekundärmassenschwungrad 3 umfasst. Auf dem Sekundärmassenschwungrad 3 ist eine Reibungskupplung unter Dazwischenlegung einer Kupplungsscheibe befestigbar, über die eine ebenfalls nicht dargestellte Eingangswelle eines Getriebes zu- und abkuppelbar ist.

Das Primärmassenschwungrad 2 und das Sekundärmassenschwungrad 3 sind über eine Lagerung zueinander verdrehbar gelagert, die bei den dargestellten Ausführungsbeispielen radial außerhalb der Bohrung 5 zur Durchführung von Befestigungsschrauben für die Montage des Primärmassenschwungrades 2 an der Abtriebswelle einer Brennkraftmaschine angeordnet ist. Zwischen dem Primärmassenschwungrad 2 und dem Sekundärmassenschwungrad 3 ist eine Dämpfungseinrichtung 6 wirksam, die Energiespeicher umfasst, welche bei den gezeigten Ausführungsformen als Bogenfederpaare 7, 8 ausgebildet sind. Jedes Bogenfederpaar 7, 8 weist zwei koaxial zueinander angeordnete Bogenfedern auf, wobei eine innere Schraubenfeder mit einem geringeren Durchmesser und eine äußere Schraubenfeder mit einem größeren Durchmesser vorgesehen sind.

Das Primärmassenschwungrad 2 und das Sekundärmassenschwungrad 3 besitzen Beaufschlagungsbereiche 9, 10, bzw. 11 für die Bogenfederpaare 7, 8. Die Beaufschlagungsbereiche 9, 10 sind durch in die das Primärmassenschwungrad 2 bildende Blechteile 12, 13 eingebrachte Anprägungen gebildet. Die axial zwischen den Beaufschlagungsbereichen 9, 10 vorgesehenen Beaufschlagungsbereiche 11 sind durch zumindest ein mit dem Sekundärmassenschwungrad 3 z.B. über Niete 14 verbundenes flanschartiges Beaufschlagungsbauteil 15 gebildet. Dieses Beaufschlagungsbauteil 15 dient als Drehmomentübertragungselement zwischen den Bogenfederpaaren 7, 8 und dem Sekundärmassenschwungrad 3. Die Beaufschlagungsbereiche 11 sind durch am Außenumfang des flanschartigen Beaufschlagungsbauteils 15 vorgesehene radiale Arme bzw. Ausleger 16 gebildet. Das durch Kaltumformung von Blechmaterial hergestellte Bauteil 12 dient zur Befestigung des Primärmassenschwungrades 2 bzw. des gesamten geteilten Schwungrades an der Antriebswelle einer Brennkraftmaschine. Radial außen ist das Bauteil 12 mit dem ebenfalls aus Blech hergestellten Bauteil 13 verbunden. Die beiden Bauteile 12 und 13 bilden einen ringförmigen Raum 21, der einen torusartigen Bereich 22 aufweist. In diesem ringförmigen Raum 21 ist jeweils ein Bogenfederpaar 7, 8 aufgenommen. In Umfangsrichtung betrachtet zwischen den Anformungen bzw. den Beaufschlagungsbereichen 9, 10 bilden die Bauteile 12, 13 Ausbuchtungen 23, 24 die den torusartigen Bereich 22 begrenzen und die Bogenfederpaare 7, 8 aufnehmen, sowie sowohl in radialer als auch in axialer Richtung führen.

Erfindungsgemäß ist bei dem Bogenfederdämpfer 1 eine Pseudo-Viererteilung der Bogenfederpaare 7, 8 vorgesehen. Dazu wird jedes Bogenfederpaar 7, 8 durch einen zusätzlichen Anschlagbereich unterteilt. Der Anschlagbereich wird bei der in Figuren 1 und 2 gezeigten Ausführungsform durch an das Primärmassenschwungrad 2 angeschweißte Klemmbleche 25, 25' gebildet. Die Klemmbleche 25, 25' sind drehfest an dem Primärmassenschwungrad 2 befestigt und greifen in die Windungen der Bogenfedern des jeweiligen Bogenfederpaares 7, 8 derart ein, dass die Bogenfeder an diesem Anschlagbereich arretiert sind.

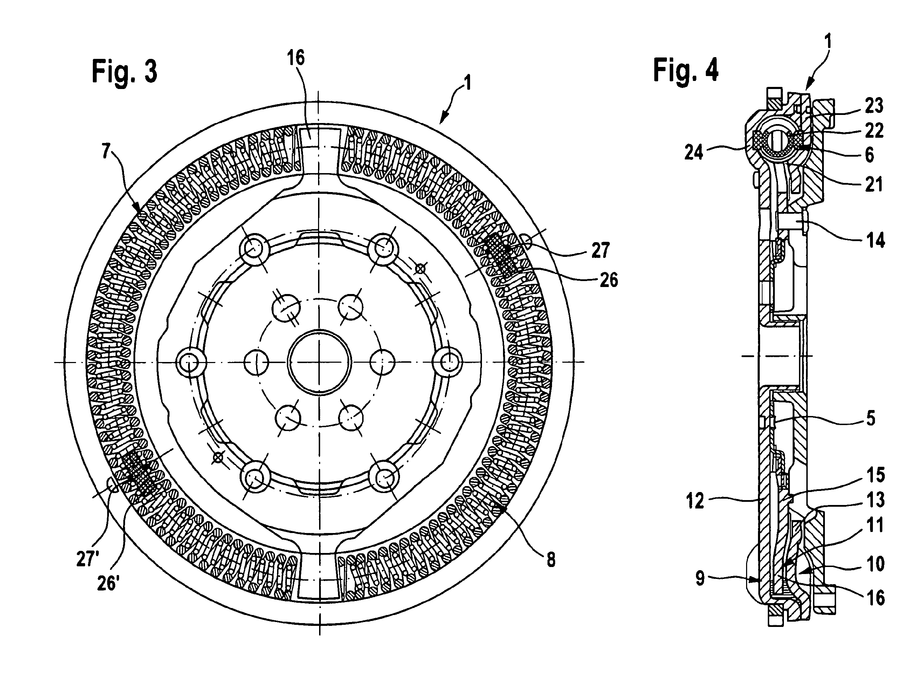

In den Figuren 3 und 4 ist eine zweite Ausführungsform der vorliegenden Erfindung dargestellt. Bei dieser Ausführungsform ist die Unterteilung des erfindungsgemäßen Bogenfederdämpfers 1 durch ein Presselement, welches als Gummiteil 26, 26' ausgebildet ist, realisiert. Bei der Verwendung von zwei gegenüberliegenden Gummiteilen 26, 26' wird das Gummiteil 26 an dem Primärmassenschwungrad 2 und das Gummiteil 26' an dem Deckel bzw. an der Ausbuchtung 23 befestigt. Beim Zusammenbauen des Bogenfederdämpfers 1 werden die Gummiteile 26, 26' derart verformt, dass sie zwischen die Windungen der Bogenfedern des jeweiligen Bogenfederpaares 7, 8 gelangen. Dadurch werden die Bogenfedern in diesem Bereich arretiert und bilden einen Anschlagbereich. Zusätzlich kann ein Federclip 27, 27' vorgesehen sein, mit dem jeweils die innere Bogenfeder und die äußere Bogenfeder jedes Bogenfederpaares 7, 8 miteinander verbunden werden.

Bei den dargestellten Ausführungsformen des erfindungsgemäßen Bogenfederdämpfers 1 werden zwei Bogenfederpaare 7, 8 verwendet. Dadurch wird bei dem erfindungsgemäßen Bogenfederdämpfer 1 eine so genannte Pseudo-Viererteilung erreicht. Vorzugsweise wird die Unterteilung derart vorgenommen, dass die Bogenfederpaare 7, 8 jeweils in ein Bogenfederwinkelsegment von 60° und in ein Bogenfedersegment von 120° unterteilt werden. Es sind auch andere Unterteilungen möglich.

### Bezugszeichenliste

- 1.: Bogenfederdämpfer
- 2.: Primärmassenschwungrad
- 3.: Sekundärmassenschwungrad
- 4.: *J.*
- 5.: Bohrung
- 6.: Dämpfungseinrichtung
- 7.: Bogenfederpaar
- 8.: Bogenfederpaar
- 9.: Beaufschlagungsbereich
- 10.: Beaufschlagungsbereich
- 11.: Beaufschlagungsbereich
- 12.: Blechteile
- 13.: Blechteile
- 14.: Niete
- 15.: Bauteil
- 16.: Ausleger
- 17.: *J.*
- 18.: *J.*
- 19.: *J.*
- 20.: *J.*
- 21.: ringförmiger Raum
- 22.: torusartiger Bereich
- 23.: Ausbuchtungen
- 24.: Ausbuchtungen
- 25.: 25' Klemmblech
- 26.: 26' Gummiteil
- 27.: 27' Federclip

## Patentansprüche

1. Torsionsschwingungsdämpfer im Antriebsstrang eines Fahrzeuges, mit einem Primärmassenschwungrad (2) und einem Sekundärmassenschwungrad (3), welche gegen den Widerstand von zumindest einem mittels Beaufschlagungsbereichen (9, 10, 11) begrenzten Energiespeicher relativ zueinander verdrehbar sind, **dadurch gekennzeichnet, dass** jeder Energiespeicher durch zumindest einen an dem Primärmassemschwungrad befestigten zusätzlichen Anschlagbereich in einen bei Zugbeanspruchung des Antriebsstrangs und einen bei Schubbeanspruchung des Antriebsstranges beanspruchten Energiespeicherteil unterteilt ist.

2. Torsionsschwingungsdämpfer nach Anspruch 1, **dadurch gekennzeichnet, dass** als Energiespeicher zumindest ein koaxial zueinander angeordnetes Bogenfederpaar (7, 8) vorgesehen ist, wobei die Windungen der Bogenfedern jedes Bogenfederpaars (7, 8) an einem vorbestimmten Bereich zum Bilden eines Anschlagbereiches arretiert sind.

3. Torsionsschwingungsdämpfer nach Anspruch 2, **dadurch gekennzeichnet, dass** zwei Bogenfederpaare (7, 8) über den Umfang des Primärmassenschwungrades (2) und des Sekundärmassenschwungrades (3) angeordnet sind, wobei jedes Bogenfederpaar (7, 8) durch den zusätzlichen Anschlagbereich in ein Bogenwinkelsegment von etwa 60° und ein Bogenwinkelsegment von etwa 120° unterteilt sind.

4. Torsionsschwingungsdämpfer nach Anspruch 3, **dadurch gekennzeichnet, dass** zur Unterteilung jedes Bogenfederpaares (7, 8) zumindest ein Klemmblech (25, 25') vorgesehen ist.

5. Torsionsschwingungsdämpfer nach Anspruch 4, **dadurch gekennzeichnet, dass** das Klemmblech (25, 25') an dem Primärmassenschwungrad (2) drehfest angeordnet ist.

6. Torsionsschwingungsdämpfer nach einem der Ansprüche 3 bis 5, **dadurch gekennzeichnet, dass** zur Unterteilung jedes Bogenfederpaares (7, 8) ein Presselement an dem Primärmassenschwungrad (2) befestigt ist.

7. Torsionsschwingungsdämpfer nach Anspruch 6, **dadurch gekennzeichnet, dass** das Presselement bei der Montage derart verformbar ist, dass es zumindest teilweise zwischen die Windungen der Bogenfedern des Bogenfederpaares (7, 8) bringbar ist.

8. Torsionsschwingungsdämpfer nach Anspruch 6 oder 7, **dadurch gekennzeichnet, dass** das Presselement als Gummiteil (26, 26') ausgebildet ist.

9. Torsionsschwingungsdämpfer nach einem der Ansprüche 7 bis 8, **dadurch gekennzeichnet, dass** ein Federclip (27, 27') zum Verbinden der inneren Bogenfeder mit der äußeren Bogenfeder eines Bogenfederpaares (7, 8) vorgesehen ist.

## Claims

1. Torsional vibration damper in the drive train of a vehicle, with a primary-mass flywheel (2) and with a secondary-mass flywheel (3) which are rotatable in relation to one another counter to the resistance of at least one energy accumulator delimited by means of impingement regions (9, 10, 11), **characterized in that** each energy accumulator is subdivided, by at least one additional abutment region fastened to the primary-mass flywheel, into an energy-accumulator part stressed in the event of traction stress upon the drive train and an energy-accumulator part stressed in the event of overrun stress upon the drive train.

2. Torsional vibration damper according to Claim 1, **characterized in that** the energy accumulator provided is at least one pair of bow springs (7, 8) arranged coaxially to one another, the turns of the bow springs of each pair of bow springs (7, 8) being detained at a predetermined region in order to form an abutment region.

3. Torsional vibration damper according to Claim 2, **characterized in that** two pairs of bow springs (7, 8) are arranged over the circumference of the primary-mass flywheel (2) and of the secondary-mass flywheel (3), each pair of bow springs (7, 8) being subdivided by the additional abutment region into a bow angle segment of about 60° and a bow angle segment of about 120°.

4. Torsional vibration damper according to Claim 3, **characterized in that** at least one clamping plate (25, 25') is provided for subdividing each pair of bow springs (7, 8).

5. Torsional vibration damper according to Claim 4, **characterized in that** the clamping plate (25, 25') is arranged fixedly in terms of rotation on the primary-mass flywheel (2).

6. Torsional vibration damper according to one of Claims 3 to 5, **characterized in that** a press element is fastened to the primary-mass flywheel (2) in order to subdivide each pair of bow springs (7, 8).

7. Torsional vibration damper according to Claim 6, **characterized in that** the press element is deformable during assembly in such a way that it can be introduced at least partially between the turns of the bow springs of the pair of bow springs (7, 8).

8. Torsional vibration damper according to Claim 6 or 7, **characterized in that** the press element is formed as a rubber part (26, 26').

9. Torsional vibration damper according to either one of Claims 7 and 8, **characterized in that** a spring clip (27, 27') is provided for connecting the inner bow spring to the outer bow spring of a pair of bow springs (7, 8).

## Revendications

1. Amortisseur d'oscillations de torsion dans la chaîne cinématique d'un véhicule, comprenant un volant d'inertie de masse primaire (2) et un volant d'inertie de masse secondaire (3), qui peuvent tourner l'un par rapport à l'autre à l'encontre de la résistance d'au moins un accumulateur d'énergie limité au moyen de zones de sollicitation (9, 10, 11), **caractérisé en ce que** chaque accumulateur d'énergie est divisé par au moins une zone de butée supplémentaire fixée au volant d'inertie de masse primaire en une partie d'accumulateur d'énergie sollicitée lors de la sollicitation en traction de la chaîne cinématique, et une partie d'accumulateur d'énergie sollicitée lors de la sollicitation en poussée de la chaîne cinématique.

2. Amortisseur d'oscillations de torsion selon la revendication 1, **caractérisé en ce que** l'on prévoit comme accumulateur d'énergie au moins une paire de ressorts en arc (7, 8) disposés coaxialement l'un par rapport à l'autre, les spires des ressorts en arc de chaque paire de ressorts en arc (7, 8) étant arrêtées au niveau d'une zone prédéterminée en vue de former une zone de butée.

3. Amortisseur d'oscillations de torsion selon la revendication 2, **caractérisé en ce que** deux paires de ressorts en arc (7, 8) sont disposées sur la périphérie du volant d'inertie de masse primaire (2) et du volant d'inertie de masse secondaire (3), chaque paire de ressorts en arc (7, 8) étant divisée par la zone de butée supplémentaire en un segment angulaire d'arc d'environ 60° et en un segment angulaire d'arc d'environ 120°.

4. Amortisseur d'oscillations de torsion selon la revendication 3, **caractérisé en ce que** pour diviser chaque paire de ressorts en arc (7, 8), on prévoit au moins une tôle de serrage (25, 25').

5. Amortisseur d'oscillations de torsion selon la revendication 4, **caractérisé en ce que** la tôle de serrage (25, 25') est disposée de manière solidaire en rotation sur le volant d'inertie de masse primaire (2).

6. Amortisseur d'oscillations de torsion selon l'une quelconque des revendications 3 à 5, **caractérisé en ce que** pour diviser chaque paire de ressorts en arc (7, 8), un élément de pressage est fixé sur le volant d'inertie de masse primaire (2).

7. Amortisseur d'oscillations de torsion selon la revendication 6, **caractérisé en ce que** l'élément de pressage peut être déformé lors du montage de telle sorte qu'il puisse être amené au moins en partie entre les spires des ressorts en arc de la paire de ressorts en arc (7, 8).

8. Amortisseur d'oscillations de torsion selon la revendication 6 ou 7, **caractérisé en ce que** l'élément de pressage est réalisé sous forme de pièce en caoutchouc (26, 26').

9. Amortisseur d'oscillations de torsion selon l'une quelconque des revendications 7 à 8, **caractérisé en ce qu'**une pince à ressort (27, 27') est prévue pour relier le ressort en arc intérieur au ressort en arc extérieur d'une paire de ressorts en arc (7, 8).
